# EUROPEAN PATENT SPECIFICATION

(11) **EP 4 243 231 B1**
(45) Date of publication and mention of the grant of the patent: **22.07.2026**
(21) Application number: 23159328.6
(22) Date of filing: 01.03.2023
(51) Int. Cl.: H02J 1/08, H02J 7/34

(54) **A TRACTOR-TRAILER**
SCHLEPPER-ANHÄNGER
TRACTEUR-REMORQUE

(30) Priority: 07.03.2022 IT 202200004268
(43) Date of publication of application: 13.09.2023
(60) Divisional application: 24185410.8
(73) Proprietor: Toyota Material Handling Manufacturing Italy S.p.A, 40132 Bologna (IT)
(72) Inventor: MASTROIANNI, Francesco, 55100 Lucca (IT)
(74) Representative: Casadei, Barbara

(56) References cited:
- US-A1- 2006 201 724
- US-A1- 2019 052 119
- US-A1- 2021 146 780

## Description

This invention relates to a tractor-trailer.

The tractor-trailers find widespread use in production chains, in warehouses, but also, for example, in ports, airports and interports.

Such tractor-trailers are mainly used for lifting loads and/or moving them from one point to another of a factory, or for example a shed, or along a production chain.

In particular, amongst the various types of tractor-trailers, electric tractor-trailers are becoming increasingly in demand and used, mainly for environmental reasons relating to emissions.

A very important aspect for tractor-trailers, in particular for electric tractor-trailers, is the duration of the energy storage systems which power their various functions.

The energy storage systems have a duration which depends greatly on the way they are used and mainly on the methods of discharging and recharging.

In particular, the need is felt in the sector to increase the autonomy of the tractor-trailer and there is therefore the need to use all the available energy of the storage systems. However, deep discharges can damage the life of these devices.

The need is also felt of minimising the recharging times, during which the tractor-trailer is not operational, and very high currents are generally used for this purpose. These currents may, however, create problems of overheating and a reduction in the life of components which are often expensive and laborious to replace.

Document US2006/201724A1 describes a power supply system with a first battery and a second battery independent of the first battery that can power two consumers.

The system comprises a controller that selectively activates and deactivates relays for controlling the supply to the consumer from the batteries respectively, depending on various possible operating parameters, including the state of charge of the two batteries.

Documents US2019/052119A1 and US2021/146780A1 relate to known solutions of electrical system configured to supply electric power to an electric load.

In this technical context, the Applicant felt the need to provide a tractor-trailer comprising the technical features described according to independent claim 1.

Advantageously, this solution makes it possible to make tractor-trailer which satisfy the above-mentioned requirements, preserving and optimising the management of charging and discharging the energy storage systems.

The features of the invention are clearly described in the claims below and its advantages are more apparent from the detailed description which follows, with reference to the accompanying drawings which illustrate a preferred, non-limiting example embodiment of the invention and in which:
- Figure 1 is a schematic side view of an embodiment of the tractor-trailer;

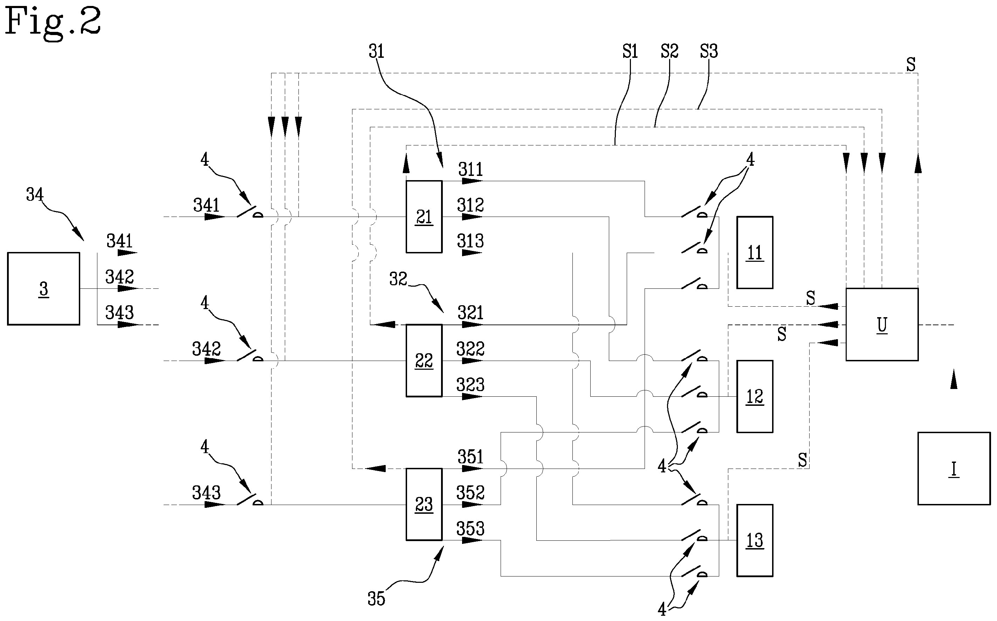

- Figure 2 schematically illustrates an embodiment of the power supply circuit of the tractor-trailer.

With reference to the accompanying drawings, the numeral 1 denotes a tractor-trailer.

In general the tractor-trailers 1 are used in production chains, warehouses, but also, for example, in ports, airports and interports.

The tractor-trailer 1 is of the electric type.

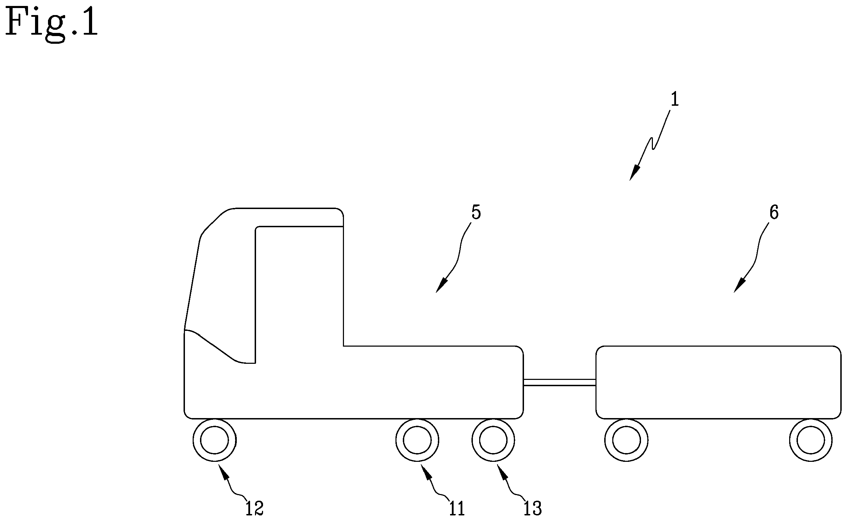

According to an embodiment, the tractor-trailer 1 comprises a tractor unit 5 and at least one trailer 6, as illustrated in Figure 1.

According to an embodiment, the tractor-trailer 1 may be of the autonomous, semi-autonomous or manual driving type.

According to the invention, the tractor-trailer 1 comprises at least a first user device 11 and a second user device 12.

According to the invention, the first user device 11 comprises a first pair of drive wheels and a respective braking system.

According to the invention, the second user device 12 comprises a steering system.

According to the invention, the tractor-trailer 1 comprises at least a first energy source 21 and a second energy source 22, independent from the first energy source 21.

The first energy source 21 and the second energy source 22 are each configured to power the first user device 11 and the second user device 12.

According to a preferred embodiment, the first energy source 21 and the second energy source 22 comprise an energy storage system, preferably an electrochemical storage system, for example a lithium ion electrochemical storage system.

According to the invention, the tractor-trailer 1 comprises a first power supply circuit 31 and a second power supply circuit 32.

The first power supply circuit 31 is configured for connecting the first energy source 21 to the first user device 11 and to the second user device 12.

According to an embodiment, the first power supply circuit 31 comprises a first branch 311 configured for connecting the first energy source 21 to the first user device 11.

According to an embodiment, the first power supply circuit 31 comprises a second branch 312 configured for connecting the first energy source 21 to the second user device 12.

Advantageously, the first branch 311 and the second branch 312 of the first power supply circuit 31 allow the first energy source 21 to supply separately the first user device 11 and the second user device 12.

According to an embodiment, the tractor-trailer 1 comprises an opening and closing device (4) for each branch between the first and the second branch (311, 312) of the first power supply circuit 31.

It should be noted that according to this embodiment, each opening and closing device 4 is preferably an electromechanical device, for example a contactor or a remote switch.

The second power supply circuit 32 is configured for connecting the second energy source 22 to the first user device 11 and to the second user device 12.

According to an embodiment, the second power supply circuit 32 comprises a first branch 321 configured for connecting the second energy source 22 to the first user device 11.

According to a further embodiment, the second power supply circuit 32 comprises a second branch 322 configured for connecting the second energy source 22 to the second user device 12.

Advantageously, the first branch 321 and the second branch 322 of the second power supply circuit 32 allow the second energy source 22 to supply separately the first user device 11 and the second user device 12. According to an embodiment, the tractor-trailer 1 comprises an opening and closing device (4) for each branch between the first and the second branch (321, 322) of the second supply circuit 32.

According to an embodiment, the tractor-trailer 1 comprises a third power supply circuit 34.

The third power supply circuit 34 is configured for connecting the first energy source 21 and the second energy source 22 to at least one recharging station 3, outside the tractor-trailer 1.

The first energy source 21 and the second energy source 22 are configured to be supplied by the recharging station 3.

In other words, the tractor-trailer 1 can interface with an external recharging station 3 in such a way that the recharging station 3 can power the first energy source 21 and the second energy source 22.

In particular, according to the embodiment wherein the first energy source 21 and the second energy source 22 are electrochemical storage systems, the recharging station 3 allows electricity to be stored in the first and second energy sources 21, 22.

According to an embodiment, the third power supply circuit 34 comprises a first branch 341 configured for connecting the first energy source 21 to the recharging station 3.

According to an embodiment, the third power supply circuit 34 comprises a second branch 342 configured for connecting the second energy source 22 to the recharging station 3.

Advantageously, the first branch 341 and the second branch 342 of the third power supply circuit 34 allow the first energy source 21 and the second energy source 22 to be powered by the recharging station 3 separately.

According to an embodiment, the tractor-trailer 1 comprises an opening and closing device (4) for each branch between the first and the second branch (341, 342) of the third power supply circuit 34.

According to an embodiment, the tractor-trailer 1 comprises a third user device 13.

According to this embodiment, the third user device 13 comprises a second pair of drive wheels and a respective braking system.

Preferably, the tractor-trailer 1 comprises a third energy source 23, independent of the first energy source 21 and the second energy source 22.

According to an embodiment, the first energy source 21 and the second energy source 22 are each configured to power the third user device 13.

According to an embodiment, first power supply circuit 31 is configured for connecting the first energy source 21 to the third user device 13 and the second power supply circuit 32 is configured for connecting the second energy source 22 to the third user device 13.

The first power supply circuit 31 comprises a third branch 313 configured for connecting the first energy source 21 to the third user device 13. Advantageously, the third branch 313 of the first power supply circuit 31 allows the first energy source 21 to supply the third user device 13 separately from the first user device 11 and the second user device 12. The second power supply circuit 32 comprises a third branch 323 configured for connecting the second energy source 22 to the third user device 13.

Advantageously, the third branch 323 of the second power supply circuit 32 allows the second energy source 22 to supply the third user device 13 separately from the first user device 11 and the second user device 12. According to an embodiment, the tractor-trailer 1 comprises an opening and closing device (4) for each branch between the third branch 313 of the first power supply circuit 31 and the third branch 323 of the second power supply circuit 32.

The third energy source 23 is configured for powering the first user device 11, the second user device 12 and the third user device 13.

According to a preferred embodiment, the third energy source 23 comprises an energy storage system, preferably an electrochemical storage system, for example a lithium ion electrochemical storage system. According to an embodiment, the tractor-trailer comprises a fourth power supply circuit 35 configured for connecting the third energy source 23 to the first user device 11, to the second user device 12 and to the third user device 13.

According to an embodiment, the fourth power supply circuit 35 comprises a first branch 351, configured for connecting the third energy source 23 to the first user device 11.

According to an embodiment, the fourth power supply circuit 35 comprises a second branch 352, configured for connecting the third energy source 23 to the second user device 12.

According to an embodiment, the fourth power supply circuit 35 comprises a third branch 353, configured for connecting the third energy source 23 to the third user device 13.

Advantageously, the first branch 351, the second branch 352 and the third branch 353 of the fourth power supply circuit 35 allow the third energy source 23 to supply separately the first user device 11, the second user device 12 and the third user device 13.

According to an embodiment, the tractor-trailer 1 comprises an opening and closing device (4) for each branch between the first, the second and the third branch (351, 352, 353) of the fourth power supply circuit 35.

According to embodiment, the third power supply circuit 34 is configured for connecting the third energy source 23 to at least one recharging station 3 outside the tractor-trailer 1.

The third energy source 23 is configured for being powered by the recharging station 3.

In other words, the tractor-trailer 1 can interface with an external recharging station 3 in such a way that the recharging station 3 can power the third energy source 23.

In particular, according to the embodiment wherein the third energy source 23 is an electrochemical storage system, the recharging station 3 allows electricity to be stored in the third energy source 23.

According to an embodiment, the third power supply circuit 34 comprises a third branch 343 configured for connecting the third energy source 23 to the recharging station 3.

Advantageously, the third branch 343 of the third power supply circuit 34 allows the third energy source 23 to be powered by the recharging station 3 separately from the first energy source 21 and the second energy source 22.

According to an embodiment, the tractor-trailer 1 comprises an opening and closing device (4) for the third branch 343 of the third power supply circuit 34.

According to the invention, the tractor-trailer 1 comprises a command and control unit U.

The command and control unit U is configured for activating and deactivating the power supply of the first user device 11, of the second user device 12 from the first power supply circuit 31 on the basis of one or more operating conditions of the tractor-trailer 1.

According to an embodiment, one or more operating conditions of the tractor-trailer 1 are defined by the energy status of the first energy source 21 and by the energy status of the second energy source 22. The command and control unit U is configured to activate and deactivate the power supply of the first user device 11 and of the second user device 12 from the second power supply circuit 32 on the basis of one or more operating conditions of the tractor-trailer 1.

In other words, the command and control unit U is configured to activate or deactivate the power supply of the first and second user devices (11, 12) selectively from the first energy source 21 or from the second energy source 22 on the basis of one or more operating conditions of the tractor-trailer 1.

According to an embodiment, the command and control unit U is configured to selectively activate and deactivate the power supply of the first energy source (21, 22) from the third power supply circuit 34 on the basis of one or more operating conditions of the tractor-trailer 1.

In other words, the command and control unit U is configured to activate or deactivate the power supply selectively of the first energy source 21 or of the second energy source 22 from the recharging station 3 on the basis of one or more operating conditions of the tractor-trailer 1.

According to a preferred embodiment, the command and control unit U is configured to receive from the first energy source 21 a first signal S1 signifying an energy status of the first energy source 21 and to receive from the second energy source 22 a second signal S2 signifying an energy status of the second energy source 22.

In other words, the command and control unit U is configured to receive information relating to the energy status of the first and of the second energy sources (21, 22) using the first and second signals (S1, S2), respectively.

This information may, for example, indicate the charging status of the energy source.

In use, receiving the first and the second signal (S1, S2), the command and control unit U is able to activate and deactivate the power supply of the first user device 11 and of the second user device 12 from the first and from the second power supply circuits (31, 32) on the basis of the energy status of the first and second energy sources (21, 22).

Receiving the first and the second signal (S1, S2), the command and control unit U is able to activate and deactivate the supply of the first and the second energy sources (21, 22) from the third power supply circuit 34 on the basis of the energy status of the first and the second energy sources (21, 22).

According to a preferred embodiment, the command and control unit U is configured to send an activation or deactivation signal S to each opening and closing device 4 as a function of the first signal S1 and of the second signal S2, for example when the energy state of the first energy source 21 and/or of the second energy source 22 reaches a predetermined threshold value.

The predetermined threshold value may be a minimum value or a maximum value.

More specifically, if the energy status of the first or second energy sources (21, 22) is less than or equal to a predetermined minimum threshold value or greater than or equal to a predetermined maximum threshold value, the command and control unit U is configured to send an activation or deactivation signal S to each opening and closing device 4.

The activation or deactivation signal S allows each opening and closing device 4 to close or open the respective branch of the respective power supply circuit and, respectively, to activate or deactivate the power supply to the user devices or the energy sources.

In other words, according to an embodiment, the command and control unit U is configured to prevent the supply of a user device from an energy source when the energy status of the energy source is less than or equal to the minimum predetermined threshold value.

Advantageously, this allows an energy source not to be discharged beyond a predetermined threshold.

In other words, according to an embodiment, the command and control unit U is configured for recharging an energy source from the recharging station 3 when the energy status of the energy source is less than or equal to the minimum predetermined threshold value.

This allows the charging of an energy source, before it discharges beyond a predetermined threshold and to only charge the energy sources which require it.

Advantageously, recharging the energy sources before they are discharged beyond a predetermined threshold allows the recharging time of the energy sources to be reduced.

Advantageously, reducing the recharging time, in the case of tractor-trailers 1, allows high currents not to be used.

Low currents make it possible to make an electrical system with smaller dimensions, simpler and more economical.

Low currents allow the use of cheap connectors which are easily available on the market.

Low currents improve the safety of the tractor-trailers 1.

Advantageously, avoiding deep discharges of the energy sources extends the life of the energy sources.

By way of example, the embodiment is considered wherein the first and second energy sources (21, 22) comprise electrochemical storage systems: some example situations will now be described in order to better clarify the operation, in use, of the tractor-trailer 1.

The situation is considered wherein the first energy source 21 has an energy status value less than or equal to the minimum predetermined threshold value, the second energy source 22 has an energy status greater than the minimum predetermined threshold value and the first user device 11 needs power supply. The command and control unit U receives the first and the second signal (S1, S2) and consequently sends the deactivation signal S to the opening and closing device 4 of the first branch 311 of the first power supply circuit 31 until the device 4 is open. The command and control unit U simultaneously sends the activation signal S to the opening and closing device 4 of the first branch 321 of the second power supply circuit 32 so that the device 4 is closed. The first user device 11 is powered by the second energy source 22 and not by the first energy source 21, at least until the first energy source 21 has an energy status value at least less than or equal to the minimum predetermined threshold value.

The situation is considered wherein the first energy source 21 has an energy status value less than or equal to the minimum predetermined threshold value, the second energy source 22 has an energy status greater than the minimum predetermined threshold value and the tractor-trailer 1 is at a recharging station 3. The command and control unit U receives the first and second signal (S1, S2) and consequently sends the activation signal S to the opening and closing device 4 of the first branch 341 of the third power supply circuit 34 so that the device 4 is closed. The control unit U simultaneously sends the deactivation signal S to the opening and closing device 4 of the second branch 342 of the third power supply circuit 34 so that the device 4 is open. Only the first energy source 21 is powered by the recharging station 3, at least until the second energy source 22 has an energy status greater than the minimum predetermined threshold value.

According to an embodiment, the command and control unit U is configured for activating and deactivating the power supply of the third user device 13 from the first power supply circuit 31 and from the second power supply circuit 32 on the basis of one or more operating conditions of the tractor-trailer 1.

According to an embodiment, one or more operating conditions of the tractor-trailer 1 are defined by the energy status of the third energy source 23.

In other words, the command and control unit U is configured to activate or deactivate the power supply of the third user device 13 selectively from the first energy source 21 or from the second energy source 22 on the basis of one or more operating conditions of the tractor-trailer 1.

The command and control unit U is configured for activating and deactivating the power supply of the first user device 11, of the second user device 12 and of the third user device 13 from the fourth power supply circuit 35 on the basis of one or more operating conditions of the tractor-trailer 1.

In other words, the command and control unit U is configured to activate or deactivate the power supply of the first, second and third user devices 11, 12, 13 selectively from the first energy source 21 or from the second energy source 22 or from the third energy source 23 on the basis of one or more operating conditions of the tractor-trailer 1.

According to an embodiment, the command and control unit U is configured to selectively activate and deactivate the power supply of the third energy source 23 from the third power supply circuit 34 on the basis of one or more operating conditions of the tractor-trailer 1.

In other words, the command and control unit U is configured to activate or deactivate the power supply selectively of the first energy source 21 or of the second energy source 22 or of the third energy source 23 from the recharging station 3 on the basis of one or more operating conditions of the tractor-trailer 1.

According to a preferred embodiment, the command and control unit U is configured to receive from the third energy source 23 a third signal S3 representing an energy status of the third energy source 23.

In other words, the command and control unit U is configured to receive information relating to the energy status of the third energy source 23 using the third signal S3.

This information may, for example, indicate the charging status of the energy source.

Receiving the first, the second and the third signals (S1, S2, S3), the command and control unit U is able to activate and deactivate the power supply of the first, the second and the third user devices (11, 12, 13) from the first and second power supply circuits (31, 32) on the basis of the energy status of the first, second and third energy sources (21, 22, 23). Receiving the first, second and third signals (S1, S2, S3), the command and control unit U is able to activate and deactivate the power supply of the first, second and third energy sources (21, 22, 23) from the third power supply circuit 34 on the basis of the energy status of the first, second and third energy sources (21, 22, 23).

According to a preferred embodiment, the command and control unit U is configured to send an activation or deactivation signal S to each opening and closing device 4 of each branch of the first, second, third and fourth supply circuits (31, 32, 34, 35) as a function of the first, the second and the third signals (S1, S2, S3), for example once the energy status of the first and/or the second and/or the third energy sources (21, 22, 23) reaches a predetermined threshold value.

For brevity of description, it should be noted that, also with regard to the third energy source 23, this predetermined threshold value has the same features and involves the same considerations and advantages already described above for the first and second energy sources (21, 22).

The purposes of a complete description, a further example of operation, in use, of the tractor-trailer 1 is given below.

The embodiment is considered wherein the tractor-trailer 1 comprises the first, second and third user devices (11, 12, 13) and the first, second and third energy sources (21, 22, 23).

The situation is considered wherein the first and third energy sources (21, 23) have an energy status value less than or equal to the minimum predetermined threshold value, the second energy source 22 has an energy status greater than the minimum predetermined threshold value and the first and third user devices (11, 13) require power supply. The command and control unit U receives the first, the second and the third signals (S1, S2, S3) and consequently sends:
- the deactivation signal S to the opening and closing devices 4 of the first and the third branch (311, 313) of the first power supply circuit 31 so that these devices 4 are open;
- the deactivation signal S to the opening and closing devices 4 of the first and the third branches (351, 353) of the fourth power supply circuit 35 so that these devices 4 are open;
- the activation signal S to the opening and closing device 4 of the first and third branches 321, 323 of the second power supply circuit 32 so that these devices 4 are closed. The first and third user devices (11, 13) are powered by the second energy source 22 and not by the first and third energy sources (21, 23), at least until the first and third energy sources (21, 23) have an energy status value less than or equal to the minimum predetermined threshold value.

It may be inferred from what is stated in use that the command and control unit U is configured to select the energy source which must power one of the user devices of the tractor-trailer 1 according to the energy status of the energy sources.

The command and control unit U is configured for selecting the energy source which must be powered by the recharging station 3 according to the energy status of the energy sources.

Advantageously, the command and control unit U allows the tractor-trailer 1 to make an optimum use of all the energy sources both with regard to the autonomy of use and with regard to the life of the energy sources. According to an aspect of the invention, an operating condition of the tractor-trailer 1 is defined by at least one piece of information I on a work cycle of the tractor-trailer 1.

This information I may comprise, for example, a predetermined path which the tractor-trailer 1 must follow, the missions or activities which the tractor-trailer 1 must carry out, the position of the external recharging station 3. The information I, in particular in the case of a tractor-trailer 1 with autonomous or semi-autonomous driving, may be sent to the command and control unit U using remote software or devices.

The command and control unit U is configured to control the power supply of the user devices and the recharging of the energy sources on the basis of the information I.

The command and control unit U is configured for selecting the energy source which must power one of the user devices of the tractor-trailer 1 according to the information I on a work cycle of the tractor-trailer 1.

The command and control unit U is configured for selecting the energy source which must be powered by the recharging station 3 according to the information I on a work cycle of the tractor trailer 1.

Advantageously, the management of the energy sources is optimised according to the autonomy required of the tractor-trailer 1 to carry out its missions or activities.

Advantageously, the tractor-trailer 1 is able to reach and interface with the recharging station 3 if a power source requires recharging.

## Claims

1. A tractor-trailer of the electric type, comprising:
at least a first user device (11) comprising a pair of drive wheels and a second user device (12);
at least a first energy source (21) and a second energy source (22) which is
independent of the first energy source (21), each configured for powering the first user device (11) and the second user device (12);
a first power supply circuit (31) configured for connecting the first energy source (21) to the first user device (11) and to the second user device (12); **characterised by**:
a second power supply circuit (32) configured for connecting the second energy source (22) to the first user device (11) and to the second user device (12);
a command and control unit (U) configured for selectively activating and
for selectively deactivating a power supply of the first user device (11) and of the second user device (12) from the first power supply circuit (31) or from the second power supply circuit (32) on the basis of one or more operating conditions of the tractor-trailer;
wherein the first user device (11) comprises the pair of drive wheels and a respective braking system and the second user device (12) comprises a steering system.

2. The tractor-trailer according to independent claim 1, **characterised in that**:
the first power supply circuit (31) comprises a first branch (311), configured for connecting the first energy source (21) to the first user device (11), and a second branch (312), configured for connecting the first energy source (21) to the second user device (12);
the second power supply circuit (32) comprises a first branch (321) configured for connecting the second energy source (22) to the first user device (11), and a second branch (322), configured for connecting the second energy source (22) to the second user device (12);
the tractor-trailer comprises an opening and closing device (4) for each of the branches (311, 312, 321, 322);
the command and control unit (U) is configured to receive from the first energy source (21) a first signal (S1) signifying an energy status of the first energy source (21) and to receive from the second energy source (22) a second signal (S2) signifying an energy status of the second energy source (22);
the command and control unit (U) is configured to send an activation or deactivation signal (S) to each opening and closing device (4) of each branch (311, 312, 321, 322) of the first and second power supply circuits (31, 32) as a function of the first signal (S1) and of the second signal (S2).

3. The tractor-trailer according to any one of the preceding claims, **characterised in that** it comprises a third power supply circuit (34) configured for connecting the first energy source (21) and the second energy source (22) to at least one recharging station (3), outside the tractor-trailer; the first energy source (21) and the second energy source (22) are configured to be supplied by the recharging station (3); the command and control unit (U) is configured to selectively switch on and off the power supply of the first energy source (21) or of the second energy source (22) from the third power supply circuit (34) on the basis of one or more operating conditions of the tractor-trailer.

4. The tractor-trailer according to claim 3, **characterised in that**:
the third power supply circuit (34) comprises a first branch (341), configured for connecting the first energy source (21) to the recharging station (3), and a second branch (342), configured for connecting the second energy source (22) to the recharging station (3);
the tractor-trailer comprises an opening and closing device (4) of each of the branches (341, 342);
the command and control unit (U) is configured to receive from the first energy source (21) a first signal (S1) signifying an energy status of the first energy source (21) and to receive from the second energy source (22) a second signal (S2) signifying an energy status of the second energy source (22);
the command and control unit (U) is configured to send an activation or deactivation signal (S) to each opening and closing device (4) of each branch (341, 342) of the third power supply circuit (34) as a function of the first signal (S1) and of the second signal (S2).

5. The tractor-trailer according to claims 3 or 4 **characterised in that**:
the tractor-trailer comprises a third user device (13) and a third energy source (23), independent of the first energy source (21) and of the second energy source (22), configured for powering the first user device (11), the second user device (12) and the third user device (13);
the first energy source (21) and the second energy source (22) are each configured to power the third user device (13);
the above-mentioned first power supply circuit (31) is configured for connecting the first energy source (21) to the third user device (13) and
the above-mentioned second power supply circuit (32) is configured for connecting the second energy source (22) to the third user device (13);
the tractor-trailer comprises a fourth power supply circuit (35) configured for connecting the third energy source (23) to the first user device (11), to the second user device (12) and to the third user device (13);
the command and control unit (U) is configured for selectively activating and deactivating the power supply of the first user device (11) or of the second user device (12) or of the third user device (13) from the fourth power supply circuit (35) on the basis of one or more operating conditions of the tractor-trailer;
the command and control unit (U) is configured for activating and deactivating the power supply of the third user device (13) selectively from the first power supply circuit (31) or from the second power supply circuit (32) or from the fourth power supply circuit (35) on the basis of one or more operating conditions of the tractor-trailer.

6. The tractor-trailer according to claim 5, **characterised in that** the first power supply circuit (31) comprises a third branch (313) configured for connecting the first energy source (21) to the third user device (13);
the second power supply circuit (32) comprises a third branch (323) configured for connecting the second energy source (22) to the third user device (13);
the fourth power supply circuit (35) comprises a first branch (351), configured for connecting the third energy source (23) to the first user device (11), a second branch (352), configured for connecting the third energy source (23) to the second user device (12) and a third branch (353), configured for connecting the third energy source (23) to the third user device (13);
the tractor-trailer comprises an opening and closing device (4) for each of the branches (313, 323, 351, 352, 353);
the command and control unit (U) is configured to receive from the third energy source (23) a third signal (S3) representing an energy status of the third energy source (23);
the command and control unit (U) is configured to send an activation or deactivation signal (S) to each opening and closing device (4) of each branch (313, 323, 351, 352, 353) of the first, second and fourth power supply circuits (31, 32, 35) as a function of the first, second and third signals (S1, S2, S3).

7. The tractor-trailer according to claim 5 or 6, **characterised in that** the third power supply circuit (34) is configured for connecting the first energy source (21), the second energy source (22) and the third energy source (23) to at least one recharging station (3), outside the tractor-trailer;
the third energy source (23) is configured for being powered by the recharging station (3);
the command and control unit (U) is configured to selectively switch on and off the power supply of the first energy source (21) or of the second energy source (22) or of the third energy source (23) from the third power supply circuit (34) on the basis of one or more operating conditions of the tractor-trailer.

8. The tractor-trailer according to claim 7, **characterised in that** the third power supply circuit (34) comprises a third branch (343), configured for connecting the third energy source (23) to the recharging station (3); the tractor-trailer comprises an opening and closing device (4) for the third branch (343) of the third power supply circuit (34);
the command and control unit (U) is configured to receive from the third energy source (23) a third signal (S3) representing an energy status of the third energy source (23);
the command and control unit (U) is configured for sending an activation or deactivation signal (S) to each opening and closing device (4) of each branch (341, 342, 343) of the third power supply circuit (34) as a function of the first, second and third signals (S1, S2, S3).

9. The tractor-trailer according to any one of claims 5 to 8, **characterised in that** the third user device (13) comprises a further pair of drive wheels and a respective braking system.

10. The tractor-trailer according to any one of claims 5 to 9, **characterised in that** the one or more operating conditions are defined by an energy status of the first energy source (21) and/or the second energy source (22) and/or the third energy source (23).

11. The tractor-trailer according to any one of claims 3-9, **characterised in that** the one or more operating conditions are defined by information (I) on a working cycle of the tractor-trailer;
this information (I) comprises a predetermined path which the tractor-trailer (1) must follow, missions or activities which the tractor-trailer (1) must carry out, and a position of the recharging station (3).

12. The tractor-trailer according to any one of the preceding claims, **characterised in that** the tractor-trailer (1) is of an autonomous, semi-autonomous or manual driving type.

## Patentansprüche

1. Schlepper-Anhänger vom elektrischen Typ, umfassend:
mindestens eine erste Nutzervorrichtung (11), umfassend ein Paar von Antriebsrädern, und eine zweite Nutzervorrichtung (12);
mindestens eine erste Energiequelle (21) und eine zweite Energiequelle (22), die von der ersten Energiequelle (21) unabhängig ist, wobei jede ausgelegt ist, um die erste Nutzervorrichtung (11) und die zweite Nutzervorrichtung (12) mit Strom zu versorgen;
einen ersten Stromversorgungskreis (31), der ausgelegt ist, um die erste Energiequelle (21) mit der ersten Nutzervorrichtung (11) und der zweiten Nutzervorrichtung (12) zu verbinden, **gekennzeichnet durch**:
einen zweiten Stromversorgungskreis (32), der ausgelegt ist, um die zweite Energiequelle (22) mit der ersten Nutzervorrichtung (11) und der zweiten Nutzervorrichtung (12) zu verbinden;
eine Befehls- und Steuereinheit (U), die ausgelegt ist, um eine Stromversorgung der ersten Nutzervorrichtung (11) und der zweiten Nutzervorrichtung (12) von dem ersten Stromversorgungskreis (31) oder von dem zweiten Stromversorgungskreis (32) basierend auf einer oder
mehreren Betriebsbedingungen des Schlepper-Anhängers wahlweise zu aktivieren und wahlweise zu deaktivieren, wobei die erste Nutzervorrichtung (11) das Paar von Antriebsrädern und ein jeweiliges Bremssystem umfasst und die zweite Nutzervorrichtung (12) ein Lenkungssystem umfasst.

2. Schlepper-Anhänger nach dem unabhängigen Anspruch 1, **dadurch gekennzeichnet, dass**:
der erste Stromversorgungskreis (31) einen ersten Abzweig (311) umfasst, der ausgelegt ist, um die erste Energiequelle (21) mit der ersten Nutzervorrichtung (11) zu verbinden, und einen zweiten Abzweig (312), der ausgelegt ist, um die erste Energiequelle (21) mit der zweiten Nutzervorrichtung (12) zu verbinden;
der zweite Stromversorgungskreis (32) einen ersten Abzweig (321) umfasst, der ausgelegt ist, um die zweite Energiequelle (22) mit der ersten Nutzervorrichtung (11) zu verbinden, und einen zweiten Abzweig (322), der ausgelegt ist, um die zweite Energiequelle (22) mit der zweiten Nutzervorrichtung (12) zu verbinden;
der Schlepper-Anhänger eine Öffnungs- und Schließvorrichtung (4) für jeden der Abzweige (311, 312, 321, 322) umfasst;
die Befehls- und Steuereinheit (U) ausgelegt ist, um von der ersten Energiequelle (21) ein erstes Signal (S1) zu empfangen, das einen Energiezustand der ersten Energiequelle (21) anzeigt, und von der zweiten Energiequelle (22) ein zweites Signal (S2) zu empfangen, das einen Energiezustand der zweiten Energiequelle (22) anzeigt;
die Befehls- und Steuereinheit (U) ausgelegt ist, um ein Aktivierungs- oder Deaktivierungssignal (S) an jede Öffnungs- und Schließvorrichtung (4) jedes Abzweigs (311, 312, 321, 322) des ersten und zweiten Stromversorgungskreises (31, 32) abhängig von dem ersten Signal (S1) und dem zweiten Signal (S2) zu senden.

3. Schlepper-Anhänger nach einem der vorhergehenden Ansprüche, **dadurch gekennzeichnet, dass** er einen dritten Stromversorgungskreis (34) umfasst, der ausgelegt ist, um die erste Energiequelle (21) und die zweite Energiequelle (22) mit mindestens einer Ladestation (3) außerhalb des Schlepper-Anhängers zu verbinden, wobei die erste Energiequelle (21) und die zweite Energiequelle (22) ausgelegt sind, um durch die Ladestation (3) versorgt zu werden, wobei die Befehls- und Steuereinheit (U) ausgelegt ist, um die Stromversorgung der ersten Energiequelle (21) oder der zweiten Energiequelle (22) von dem dritten Stromversorgungskreis (34) basierend auf einer oder mehreren Betriebsbedingungen des Schlepper-Anhängers wahlweise ein- und auszuschalten.

4. Schlepper-Anhänger nach Anspruch 3, **dadurch gekennzeichnet, dass**:
der dritte Stromversorgungskreis (34) einen ersten Abzweig (341) umfasst, der ausgelegt ist, um die erste Energiequelle (21) mit der Ladestation (3) zu verbinden, und einen zweiten Abzweig (342), der ausgelegt ist, um die zweite Energiequelle (22) mit der Ladestation (3) zu verbinden;
der Schlepper-Anhänger eine Öffnungs- und Schließvorrichtung (4) für jeden der Abzweige (341, 342) umfasst;
die Befehls- und Steuereinheit (U) ausgelegt ist, um von der ersten Energiequelle (21) ein erstes Signal (S1) zu empfangen, das einen Energiezustand der ersten Energiequelle (21) anzeigt, und von der zweiten Energiequelle (22) ein zweites Signal (S2) zu empfangen, das einen Energiezustand der zweiten Energiequelle (22) anzeigt;
die Befehls- und Steuereinheit (U) ausgelegt ist, um ein Aktivierungs- oder Deaktivierungssignal (S) an jede Öffnungs- und Schließvorrichtung (4) jedes Abzweigs (341, 342) des dritten Stromversorgungskreises (34) abhängig von dem ersten Signal (S1) und dem zweiten Signal (S2) zu senden.

5. Schlepper-Anhänger nach den Ansprüchen 3 oder 4, **dadurch gekennzeichnet, dass**:
der Schlepper-Anhänger eine dritte Nutzervorrichtung (13) und eine dritte Energiequelle (23) umfasst, die von der ersten Energiequelle (21) und der zweiten Energiequelle (22) unabhängig und ausgelegt ist, um die erste Nutzervorrichtung (11), die zweite Nutzervorrichtung (12) und die dritte Nutzervorrichtung (13) mit Strom zu versorgen;
die erste Energiequelle (21) und die zweite Energiequelle (22) jeweils ausgelegt sind, um die dritte Nutzervorrichtung (13) mit Strom zu versorgen;
der oben genannte erste Stromversorgungskreis (31) ausgelegt ist, um die erste Energiequelle (21) mit der dritten Nutzervorrichtung (13) zu verbinden, und der oben genannte zweite Stromversorgungskreis (32) ausgelegt ist, um die zweite Energiequelle (22) mit der dritten Nutzervorrichtung (13) zu verbinden;
der Schlepper-Anhänger einen vierten Stromversorgungskreis (35) umfasst, der ausgelegt ist, um die dritte Energiequelle (23) mit der ersten Nutzervorrichtung (11), der zweiten Nutzervorrichtung (12) und der dritten Nutzervorrichtung (13) zu verbinden;
die Befehls- und Steuereinheit (U) ausgelegt ist, um die Stromversorgung der ersten Nutzervorrichtung (11) oder der zweiten Nutzervorrichtung (12) oder der dritten Nutzervorrichtung (13) von dem vierten Stromversorgungskreis (35) basierend auf einer oder mehreren Betriebsbedingungen des Schlepper-Anhängers wahlweise zu aktivieren und zu deaktivieren;
die Befehls- und Steuereinheit (U) ausgelegt ist, um die Stromversorgung der dritten Nutzervorrichtung (13) wahlweise von dem ersten Stromversorgungskreis (31) oder von dem zweiten Stromversorgungskreis (32) oder von dem vierten Stromversorgungskreis (35) basierend auf einer oder mehreren Betriebsbedingungen des Schlepper-Anhängers zu aktivieren und zu deaktivieren.

6. Schlepper-Anhänger nach Anspruch 5, **dadurch gekennzeichnet, dass** der erste Stromversorgungskreis (31) einen dritten Abzweig (313) umfasst, der ausgelegt ist, um die erste Energiequelle (21) mit der dritten Nutzervorrichtung (13) zu verbinden;
der zweite Stromversorgungskreis (32) einen dritten Abzweig (323) umfasst, der ausgelegt ist, um die zweite Energiequelle (22) mit der dritten Nutzervorrichtung (13) zu verbinden;
der vierte Stromversorgungskreis (35) einen ersten Abzweig (351) umfasst, der ausgelegt ist, um die dritte Energiequelle (23) mit der ersten Nutzervorrichtung (11) zu verbinden, einen zweiten Abzweig (352), der ausgelegt ist, um die dritte Energiequelle (23) mit der zweiten Nutzervorrichtung (12) zu verbinden, und einen dritten Abzweig (353), der ausgelegt ist, um die dritte Energiequelle (23) mit der dritten Nutzervorrichtung (13) zu verbinden;
der Schlepper-Anhänger eine Öffnungs- und Schließvorrichtung (4) für jeden der Abzweige (313, 323, 351, 352, 353) umfasst;
die Befehls- und Steuereinheit (U) ausgelegt ist, um von der dritten Energiequelle (23) ein drittes Signal (S3) zu empfangen, das einen Energiezustand der dritten Energiequelle (23) darstellt;
die Befehls- und Steuereinheit (U) ausgelegt ist, um ein Aktivierungs- oder Deaktivierungssignal (S) an jede Öffnungs- und Schließvorrichtung (4) jedes Abzweigs (313, 323, 351, 352, 353) des ersten, zweiten und vierten Stromversorgungskreises (31, 32, 35) abhängig von dem ersten, zweiten und dritten Signal (S1, S2, S3) zu senden.

7. Schlepper-Anhänger nach Anspruch 5 oder 6, **dadurch gekennzeichnet, dass** der dritte Stromversorgungskreis (34) ausgelegt ist, um die erste Energiequelle (21), die zweite Energiequelle (22) und die dritte Energiequelle (23) mit mindestens einer Ladestation (3) außerhalb des Schlepper-Anhängers zu verbinden;
die dritte Energiequelle (23) ausgelegt ist, um durch die Ladestation (3) mit Strom versorgt zu werden;
die Befehls- und Steuereinheit (U) ausgelegt ist, um die Stromversorgung der ersten Energiequelle (21) oder der zweiten Energiequelle (22) oder der dritten Energiequelle (23) von dem dritten Stromversorgungskreis (34) basierend auf einer oder mehreren Betriebsbedingungen des Schlepper-Anhängers wahlweise ein- und auszuschalten.

8. Schlepper-Anhänger nach Anspruch 7, **dadurch gekennzeichnet, dass** der dritte Stromversorgungskreis (34) einen dritten Abzweig (343) umfasst, der ausgelegt ist, um die dritte Energiequelle (23) mit der Ladestation (3) zu verbinden,
wobei der Schlepper-Anhänger eine Öffnungs- und Schließvorrichtung (4) für den dritten Abzweig (343) des dritten Stromversorgungskreises (34) umfasst;
die Befehls- und Steuereinheit (U) ausgelegt ist, um von der dritten Energiequelle (23) ein drittes Signal (S3) zu empfangen, das einen Energiezustand der dritten Energiequelle (23) darstellt;
die Befehls- und Steuereinheit (U) ausgelegt ist, um ein Aktivierungs- oder Deaktivierungssignal (S) an jede Öffnungs- und Schließvorrichtung (4) jedes Abzweigs (341, 342, 343) des dritten Stromversorgungskreises (34) abhängig von dem ersten, zweiten und dritten Signal (S1, S2, S3) zu senden.

9. Schlepper-Anhänger nach einem der Ansprüche 5 bis 8, **dadurch gekennzeichnet, dass** die dritte Nutzervorrichtung (13) ein weiteres Paar von Antriebsrädern und ein jeweiliges Bremssystem umfasst.

10. Schlepper-Anhänger nach einem der Ansprüche 5 bis 9, **dadurch gekennzeichnet, dass** die eine oder mehreren Betriebsbedingungen durch einen Energiezustand der ersten Energiequelle (21) und/oder der zweiten Energiequelle (22) und/oder der dritten Energiequelle (23) definiert sind.

11. Schlepper-Anhänger nach einem der Ansprüche 3-9, **dadurch gekennzeichnet, dass** die eine oder mehreren Betriebsbedingungen durch Informationen (I) über einen Arbeitszyklus des Schlepper-Anhängers definiert sind, wobei diese Informationen (I) einen vorgegebenen Weg, dem der Schlepper-Anhänger (1) zu folgen hat, Aufgaben oder Tätigkeiten, die der Schlepper-Anhänger (1) durchzuführen hat und eine Position der Ladestation (3) umfassen.

12. Schlepper-Anhänger nach einem der vorhergehenden Ansprüche,
**dadurch gekennzeichnet, dass** der Schlepper-Anhänger (1) vom autonomen, halbautonomen oder manuellen Fahrtyp ist.

## Revendications

1. Tracteur-remorque de type électrique, comprenant :
au moins un premier dispositif utilisateur (11) comprenant une paire de roues motrices et un deuxième dispositif utilisateur (12) ;
au moins une première source d'énergie (21) et une deuxième source d'énergie (22) qui est indépendante de la première source d'énergie (21), chacune configurée pour alimenter le premier dispositif utilisateur (11) et le deuxième dispositif utilisateur (12) ;
un premier circuit d'alimentation électrique (31) configuré pour connecter la première source d'énergie (21) au premier dispositif utilisateur (11) et au deuxième dispositif utilisateur (12) ; **caractérisé par** :
un deuxième circuit d'alimentation électrique (32) configuré pour connecter la deuxième source d'énergie (22) au premier dispositif utilisateur (11) et au deuxième dispositif utilisateur (12) ;
une unité de commande et de contrôle (U) configurée pour activer de manière sélective et pour désactiver de manière sélective une alimentation électrique du premier dispositif utilisateur (11) et du deuxième dispositif utilisateur (12) à partir du premier circuit d'alimentation électrique (31) ou à partir du deuxième circuit d'alimentation électrique (32) sur la base d'une ou de plusieurs conditions de fonctionnement du tracteur-remorque ;
dans lequel le premier dispositif utilisateur (11) comprend la paire de roues motrices et un système de freinage respectif et le deuxième dispositif utilisateur (12) comprend un système de direction.

2. Tracteur-remorque selon la revendication indépendante 1, **caractérisé en ce que** :
le premier circuit d'alimentation électrique (31) comprend une première branche (311), configurée pour connecter la première source d'énergie (21) au premier dispositif utilisateur (11), et une deuxième branche (312), configurée pour connecter la première source d'énergie (21) au deuxième dispositif utilisateur (12) ;
le deuxième circuit d'alimentation électrique (32) comprend une première branche (321) configurée pour connecter la deuxième source d'énergie (22) au premier dispositif utilisateur (11), et une deuxième branche (322), configurée pour connecter la deuxième source d'énergie (22) au deuxième dispositif utilisateur (12) ;
le tracteur-remorque comprend un dispositif d'ouverture et de fermeture (4) pour chacune des branches (311, 312, 321, 322) ;
l'unité de commande et de contrôle (U) est configurée pour recevoir de la première source d'énergie (21) un premier signal (S1) indiquant un état d'énergie de la première source d'énergie (21) et pour recevoir de la deuxième source d'énergie (22) un deuxième signal (S2) indiquant un état d'énergie de la deuxième source d'énergie (22) ;
l'unité de commande et de contrôle (U) est configurée pour envoyer un signal d'activation ou de désactivation (S) à chaque dispositif d'ouverture et de fermeture (4) de chaque branche (311, 312, 321, 322) des premier et deuxième circuits d'alimentation électrique (31, 32) en fonction du premier signal (S1) et du deuxième signal (S2).

3. Tracteur-remorque selon l'une quelconque des revendications précédentes, **caractérisé en ce qu'**il comprend un troisième circuit d'alimentation électrique (34) configuré pour connecter la première source d'énergie (21) et la deuxième source d'énergie (22) à au moins une station de recharge (3), à l'extérieur du tracteur-remorque ; la première source d'énergie (21) et la deuxième source d'énergie (22) sont configurées pour être alimentées par la station de recharge (3) ; l'unité de commande et de contrôle (U) est configurée pour commuter de manière sélective l'alimentation électrique de la première source d'énergie (21) ou de la deuxième source d'énergie (22) à partir du troisième circuit d'alimentation électrique (34) sur la base d'une ou de plusieurs conditions de fonctionnement du tracteur-remorque.

4. Tracteur-remorque selon la revendication 3, **caractérisé en ce que** :
le troisième circuit d'alimentation électrique (34) comprend une première branche (341), configurée pour connecter la première source d'énergie (21) à la station de recharge (3), et une deuxième branche (342), configurée pour connecter la deuxième source d'énergie (22) à la station de recharge (3) ;
le tracteur-remorque comprend un dispositif d'ouverture et de fermeture (4) de chacune des branches (341, 342) ; l'unité de commande et de contrôle (U) est configurée pour recevoir de la première source d'énergie (21) un premier signal (S1) indiquant un état d'énergie de la première source d'énergie (21) et pour recevoir de la deuxième source d'énergie (22) un deuxième signal (S2) indiquant un état d'énergie de la deuxième source d'énergie (22) ;
l'unité de commande et de contrôle (U) est configurée pour envoyer un signal d'activation ou de désactivation (S) à chaque dispositif d'ouverture et de fermeture (4) de chaque branche (341, 342) du troisième circuit d'alimentation électrique (34) en fonction du premier signal (S1) et du deuxième signal (S2).

5. Tracteur-remorque selon les revendications 3 ou 4, **caractérisé en ce que** :
le tracteur-remorque comprend un troisième dispositif utilisateur (13) et une troisième source d'énergie (23),
indépendante de la première source d'énergie (21) et de la deuxième source d'énergie (22), configurée pour alimenter le premier dispositif utilisateur (11), le deuxième dispositif utilisateur (12) et le troisième dispositif utilisateur (13) ;
la première source d'énergie (21) et la deuxième source d'énergie (22) sont chacune configurées pour alimenter le troisième dispositif utilisateur (13) ;
le premier circuit d'alimentation électrique (31) susmentionné est configuré pour connecter la première source d'énergie (21) au troisième dispositif utilisateur (13) et le deuxième circuit d'alimentation électrique (32) susmentionné est configuré pour connecter la deuxième source d'énergie (22) au troisième dispositif utilisateur (13) ;
le tracteur-remorque comprend un quatrième circuit d'alimentation électrique (35) configuré pour connecter la troisième source d'énergie (23) au premier dispositif utilisateur (11), au deuxième dispositif utilisateur (12) et au troisième dispositif utilisateur (13) ;
l'unité de commande et de contrôle (U) est configurée pour activer et désactiver de manière sélective l'alimentation électrique du premier dispositif utilisateur (11) ou du deuxième dispositif utilisateur (12) ou du troisième dispositif utilisateur (13) à partir du quatrième circuit d'alimentation électrique (35) sur la base d'une ou de plusieurs conditions de fonctionnement du tracteur-remorque ;
l'unité de commande et de contrôle (U) est configurée pour activer et désactiver l'alimentation électrique du troisième dispositif utilisateur (13) de manière sélective à partir du premier circuit d'alimentation électrique (31) ou à partir du deuxième circuit d'alimentation électrique (32) ou à partir du quatrième circuit d'alimentation électrique (35) sur la base d'une ou de plusieurs conditions de fonctionnement du tracteur-remorque.

6. Tracteur-remorque selon la revendication 5, **caractérisé en ce que** le premier circuit d'alimentation électrique (31) comprend une troisième branche (313) configurée pour connecter la première source d'énergie (21) au troisième dispositif utilisateur (13) ;
le deuxième circuit d'alimentation électrique (32) comprend une troisième branche (323) configurée pour connecter la deuxième source d'énergie (22) au troisième dispositif utilisateur (13) ;
le quatrième circuit d'alimentation électrique (35) comprend une première branche (351), configurée pour connecter la troisième source d'énergie (23) au premier dispositif utilisateur (11), une deuxième branche (352), configurée pour connecter la troisième source d'énergie (23) au deuxième dispositif utilisateur (12) et une troisième branche (353), configurée pour connecter la troisième source d'énergie (23) au troisième dispositif utilisateur (13) ;
le tracteur-remorque comprend un dispositif d'ouverture et de fermeture (4) pour chacune des branches (313, 323, 351, 352, 353) ;
l'unité de commande et de contrôle (U) est configurée pour recevoir de la troisième source d'énergie (23) un troisième signal (S3) représentant un état d'énergie de la troisième source d'énergie (23) ;
l'unité de commande et de contrôle (U) est configurée pour envoyer un signal d'activation ou de désactivation (S) à chaque dispositif d'ouverture et de fermeture (4) de chaque branche (313, 323, 351, 352, 353) des premier, deuxième et quatrième circuits d'alimentation électrique (31, 32, 35) en fonction des premier, deuxième et troisième signaux (S1, S2, S3).

7. Tracteur-remorque selon la revendication 5 ou 6, **caractérisé en ce que** le troisième circuit d'alimentation électrique (34) est configuré pour connecter la première source d'énergie (21), la deuxième source d'énergie (22) et la troisième source d'énergie (23) à au moins une station de recharge (3), à l'extérieur du tracteur-remorque ;
la troisième source d'énergie (23) est configurée pour être alimentée par la station de recharge (3) ;
l'unité de commande et de contrôle (U) est configurée pour commuter de manière sélective l'alimentation électrique de la première source d'énergie (21) ou de la deuxième source d'énergie (22) ou de la troisième source d'énergie (23) à partir du troisième circuit d'alimentation électrique (34) sur la base d'une ou de plusieurs conditions de fonctionnement du tracteur-remorque.

8. Tracteur-remorque selon la revendication 7, **caractérisé en ce que** le troisième circuit d'alimentation électrique (34) comprend une troisième branche (343), configurée pour connecter la troisième source d'énergie (23) à la station de recharge (3) ;
le tracteur-remorque comprend un dispositif d'ouverture et de fermeture (4) pour la troisième branche (343) du troisième circuit d'alimentation électrique (34) ;
l'unité de commande et de contrôle (U) est configurée pour recevoir de la troisième source d'énergie (23) un troisième signal (S3) représentant un état d'énergie de la troisième source d'énergie (23) ;
l'unité de commande et de contrôle (U) est configurée pour envoyer un signal d'activation ou de désactivation (S) à chaque dispositif d'ouverture et de fermeture (4) de chaque branche (341, 342, 343) du troisième circuit d'alimentation électrique (34) en fonction des premier, deuxième et troisième signaux (S1, S2, S3).

9. Tracteur-remorque selon l'une quelconque des revendications 5 à 8, **caractérisé en ce que** le troisième dispositif utilisateur (13) comprend une autre paire de roues motrices et un système de freinage respectif.

10. Tracteur-remorque selon l'une quelconque des revendications 5 à 9,
**caractérisé en ce que** l'une ou les plusieurs conditions de fonctionnement sont définies par un état d'énergie de la première source d'énergie (21) et/ou de la deuxième source d'énergie (22) et/ou de la troisième source d'énergie (23).

11. Tracteur-remorque selon l'une quelconque des revendications 3-9,
**caractérisé en ce que** l'une ou les plusieurs conditions de fonctionnement sont définies par des informations (I) sur un cycle de travail du tracteur-remorque ;
ces informations (I) comprennent un trajet prédéterminé que le tracteur-remorque (1) doit suivre, des missions ou des activités que le tracteur-remorque (1) doit effectuer, et une position de la station de recharge (3).

12. Tracteur-remorque selon l'une quelconque des revendications précédentes,
**caractérisé en ce que** le tracteur-remorque (1) est de type à conduite autonome, semi-autonome ou manuelle.
